(19) Europäisches Patentamt
European Patent Office
Office européen des brevets

(11) Publication number: 0 035 278
B1

(12) **EUROPEAN PATENT SPECIFICATION**

(45) Date of publication of patent specification: **22.01.86**

(51) Int. Cl.$^4$: **C 08 L 23/02,** C 08 L 33/08

(21) Application number: **81101551.0**

(22) Date of filing: **04.03.81**

(54) **Compositions of alkylene-alkyl acrylate copolymers having improved flame retardant properties.**

(30) Priority: **05.03.80 US 127509**
**30.09.80 US 192356**

(43) Date of publication of application:
**09.09.81 Bulletin 81/36**

(45) Publication of the grant of the patent:
**22.01.86 Bulletin 86/04**

(84) Designated Contracting States:
**AT BE CH DE FR GB IT LI NL SE**

(56) References cited:
**EP-A-0 007 748**
**DE-A-2 546 668**
**FR-A-2 124 517**
**FR-A-2 303 044**
**FR-A-2 346 398**
**US-A-3 803 065**
**US-A-3 816 367**
**US-A-3 996 142**
**US-A-4 064 359**

(73) Proprietor: **UNION CARBIDE CORPORATION**
**39 Old Ridgebury Road**
**Danbury Connecticut 06817 (US)**

(72) Inventor: **Keogh, Michael John**
**13 Jeffrey Lane**
**Bridgewater New Jersey 08807 (US)**

(74) Representative: **Weinhold, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz**
***Siegfriedstrasse 8***
**D-8000 München 40 (DE)**

**EP 0 035 278 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Summary of the invention

This invention relates to compositions, having improved flame retardant properties and reduced gas evolution, on burning, which contain a copolymer of an alkylene-alkyl acrylate, a halogenated flame retardant additive, an antimony oxide and an oxide, carbonate, hydroxide or sulfate of magnesium or calcium, and are particularly useful as jacketing material about industrial control cables and telephone wires and cables and as insulation about electrical conductors.

Background of the invention

Compositions based on olefin polymers, such as copolymers of an alkylene-alkyl acrylate, by reason of their advantageous physical and electrical properties, have been suggested for use in various commercial applications. For example, alkylene-alkyl acrylate copolymers are corrosion resistant, tough and abrasion resistant. Consequently, alkylene-alkyl acrylate copolymers have been suggested for use in compositions to be used as jacketing material about industrial control cables and telephone wires and cables and as insulation about electrical conductors.

Although alkylene-alkyl acrylate copolymers have properties which make them desirable for use in compositions which are to be used as jacketing material and as insulation, as described, alkylene-alkyl acrylate copolymers suffer the disadvantages of being flammable. In order to render these copolymers flame retardant and also, in order to reduce gas evolution, on burning, a halogenated flame retardant additive and an alkaline earth metal salt or base have been added thereto. These compositions are commercially attractive systems which are flame retardant, and upon burning, do not produce dense smoke, do not evolve high levels of acidic and corrosive gases and, in addition, exhibit reduced after-glow.

In the FR-A-2 346 398 a polymer composition is claimed which comprises an ethylen/vinyl acetate copolymer, 15 to 40 percent by weight of a halogenated flame-retardant additive, 0.5 to 4 percent by weight of magnesium oxide or calcium carbonate, 5 to 30 percent by weight of antimony trioxide as well as fillers and cross-linking agents. Although it is stated in this patent specification that the compositions are flame retardant ones, this effect is still not satisfactory.

Furthermore, the US—A—3 816 367 describes and claims an aqueous dispersion for use as a flame retardant which consists essentially of at least one thermally unstable chlorine source selected from the group consisting of chlorinated paraffin waxes, chlorinated terphenyls, chlorinated rubber and polyvinyl chlorides, a non-fused mixture comprising between 70 and 90 percent by weight of at least one antimony oxide with between 10 and 30 percent by weight of a compound selected from the group consisting of sodium·antimonate, potassium antimonate and magnesium antimonate, and furthermore magnesium hydroxide in a concentration of between 5 and 15 percent based on the total weight of antimony and magnesium compounds. It is known that the presence of antimony oxide results in the production of dense smoke on burning, evolving acidic and other corrosive gases. Therefore the possibility to reduce the amount of antimony oxide is an advantage. Furthermore it is, of course, favourable to eliminate an essential component of these known compositions, i.e. the antimonate. Finally, it can be seen from the experimental data of this patent specification that the addition of a calcium or magnesium compound to an alkylene/alkyl acrylate copolymer is not very effective in increasing the flame retardancy.

Currently, in light of more stringent industry standards and more stringent government regulations, there is an immediate need for compositions which are characterized by a higher degree of flame retardancy with no unacceptable degradation of other desirable properties previously discussed.

Description of the invention

The present invention provides compositions which meet the need of improved flame retardancy while maintaining acceptable standards with respect to other desirable properties.

Compositions of the present invention, useful for the applications described, comprise a normally solid alkylene-alkyl acrylate copolymer, from one to 30 percent by weight and preferably from about 5 to about 20 percent by weight of a halogenated flame retardant additive, from about 0.5 to about 30 percent by weight, preferably from about 2.5 to about 12 percent by weight of an oxide, carbonate, hydroxide or sulfate of magnesium or calcium and from 0.5 to 15 percent by weight, preferably from about one to about 10 percent by weight of an antimony oxide, preferably antimony trioxide.

In those instances wherein the compositions are to be used in molding applications to form such articles as flame retardant waste paper baskets, household fixtures and the like, the amount of alkaline earth metal salt or base in the compositions can be 0.5 to 50 percent by weight.

A particularly desirable composition for use as insulation about electrical conductors comprises a normally solid alkylene-alkyl acrylate copolymer from about one to about 30 percent by weight of a halogenated flame retardant additive, from about 0.5 to 20 percent by weight of an alkaline earth metal salt or base, as described, and from about one to about 5 percent by weight of an antimony oxide.

A particularly desirable composition for use as jacketing about industrial control cables and telephone wires and cables comprises a normally solid alkylene-alkyl acrylate copolymer, from about one to about 30 percent by weight of a halogenated flame retardant additive, more than 20 and up to about 30 percent by

weight of an alkaline earth metal salt or base, as described, and from about one to about 10 percent by weight of an antimony oxide.

Percent by weight, unless otherwise specified, is based on the total weight of the composition, 100 percent by weight.

Also, mixtures of materials can be used, if so desired.

The alkylene-alkyl acrylate copolymers of the present invention are known products produced by reacting an alkene with an alkyl acrylate and usually contain about 2 to about 50 percent by weight combined alkyl acrylate.

Suitable alkenes are ethylene, propylene, butene-1, isobutylene, pentene-1, 2-methylbutene-1, 3-methylbutene-1, hexene, heptene-1, octene-1 and the like.

The alkylene moiety of the alkylene-alkyl acrylate copolymers contain from 2 to 18 carbon atoms inclusive, preferably 2 to 3 carbon atoms inclusive.

Suitable alkyl acrylate monomers which are copolymerized with the alkenes fall within the scope of the following formula:

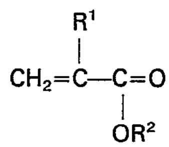

wherein $R^1$ is hydrogen or methyl and $R^2$ is alkyl having one to 8 carbon atoms inclusive. Illustrative compounds encompassed by this formula are: methyl acrylate, ethyl acrylate, methyl methacrylate, *n*-butyl acrylate, t-butyl acrylate, *n*-butyl methacrylate, 2-ethylhexyl acrylate and the like.

Alkylene-alkyl acrylate copolymers generally have a density (ASTMD 1505) with a conditioning as in ASTMD 147—72 of about 0.92 to about 0.94 and a melt index (ASTMD-1237 of 3.04 bar (44 psi) tested pressure) of about 0.5 to about 500 decigrams per minute.

For purposes of the present invention, the preferred copolymer is ethylene-ethyl acrylate, generally having about three to about 40 percent by weight combined ethyl acrylate, preferably having about 5 to about 20 percent by weight combined ethyl acrylate. Combined alkyl acrylate is conveniently determined by infrared analysis.

Halogenated flame retardant additives, useful for purposes of the present invention, are well known to those skilled in the art. These flame retardant additives are halogenated (brominated or chlorinated) organic compounds. The preferred halogenated organic compounds include chlorinated polyethylene, polyvinyl chloride, polyvinylidene chloride, polyvinyl chloride copolymers, halogenated paraffin waxes, chlorinated alicyclic hydrocarbons, and brominated aromatic compounds. The most preferred include decabromodiphenyl oxide and compounds of the following formula:

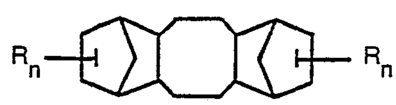

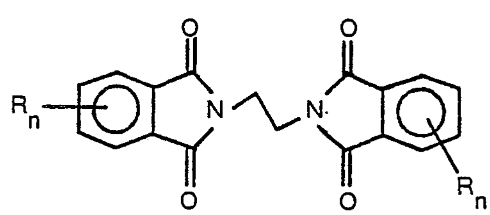

wherein R is independently chlorine or bromine and n is an integer from 1 to 6 such as ethylene(bis-tetrabromophthalimide).

The calcium or magnesium oxides, carbonates, hydroxides, or sulfates of the present invention are commercially available in different forms and grades.

The calcium or magnesium oxides, carbonates, hydroxides, or sulfates may be optionally coated with any compatible hydrophobic material. The preferred coating materials are metal salts of fatty acids, organo silanes and organo titanates.

According to a special embodiment of this invention the magnesium or calcium compound is present in an amount of from about 0.5 to 20 percent by weight.

Exemplary of the metal component of the salts of the fatty acids fall in Group Ia, IIa or IIb of the Periodic Table (Handbook of Chemistry and Physics—50th Edition). Acids used to form the metal salts are saturated or unsaturated monobasic or dibasic, branched or straight chain fatty acids of 8—20 carbon atoms. Such acids that may be included within the practice of this invention, but are not limited thereto, are palmitic,

stearic, lauric, oleic, sebacic, ricinoleic, palmitoleic and the like. The preferred acid is stearic acid while the preferred metal salts are calcium stearate and zinc stearate.

The organo silanes are preferably alkoxy silanes such as alkyl alkoxy silane, alkenyl alkoxy silane, alkynyl alkoxy silane, alkyl aryl alkoxy silane, alkenyl aryl alkoxy silane and alkynyl aryl alkoxy silane. Suitable alkoxy silanes include, for example, methyltriethoxy silane, methyl-tris-(2-methoxyethoxy) silane, dimethyldiethoxy silane, allyltrimethoxy silane and the like. Also suitable are the vinyl silanes such as vinyl-tris-(2-methoxyethoxy) silane, vinyl trimethoxy silane, vinyl triethoxy silane and the like. If desired, the organo silane, per se, can be included in the composition as an additive.

Illustrative of suitable organo titanates fall within the scope of the following formula:

$$Ti(OR^3)_4$$

wherein $R^3$ is a hydrocarbon radical. Exemplary of organo titanates are tetrabutyl titanate, tetraisopropyl titanate and the like.

The alkaline earth metal compounds can be coated by admixing about 0.05 to about 5 parts by weight of hydrophobic material per 100 parts by weight of alkaline earth metal salt or base in a two-roll mill, Henschel mixer, Waring blender and the like.

Any of the antimony oxides, antimony trioxide, antimony tetra-oxide and antimony pentaoxide are suitable for purposes of the present invention. Antimony trioxide is preferred. Also, an antimony oxide in the nature of a complexed salt such as sold commercially by National Lead Co. under the trade name ONCOR can be used, if desired. These complexed salts are exemplified by antimony oxide-zinc silicate salts.

The compositions of the present invention can contain other additives, as is well known in the art, depending upon the ultimate use of the composition.

For example, the compositions can contain peroxides to cure the compositions to crosslinked products, generally on the order of about 0.05 to 4.0 percent by weight; antioxidants; conductive carbon blacks as well as other additives commonly used in moldable compositions, curable compositions, compositions to be extruded into film material, compositions to be used as coatings, adhesives and the like.

When the compositions of the present invention are to be used in wire and cable or molding applications, it is advantageous that the compositions contain a filler. A preferred filler is talc, especially talc coated with a metal salt of a fatty acid, previously described.

The compositions of the present invention are conveniently prepared by blending or compounding the components thereof in a suitable apparatus. The alkylene-alkyl acrylate copolymer and the other desired components may be blended together by any of the techniques used in the art to blend and compound thermoplastics to homogeneous masses. Prior to or during the blending of the components together, the calcium or magnesium oxide, carbonate, hydroxide or sulfate may be coated by known techniques. As regards blending, the components may be fluxed on a variety of apparatus including multi-roll mills, screw mills, continuous mixers, extruders and Banbury mixers.

When all the solid components of the compositions are available in the form of a powder, or as small particles, the compositions are most conveniently prepared by first making a blend of the components, for instance, in a Banbury mixer or a continuous extruder, and then masticating this blend on a heated mill, for instance a two-roll mill, and the milling continued until an intimate mixture of the components is obtained.

In those instances wherein the copolymer is not available in powder form, the compositions may be prepared by introducing the copolymer to a two-roll mill, masticating it until it forms a band around roll, after which a blend of the remaining components is added and the milling continued until an intimate mixture is obtained. The rolls are preferably maintained at a temperature which is within the range of 80°C to 135°C and which is below the decomposition temperatures of the peroxide compound(s) if such are used. The composition, in the form of a sheet, is removed from the mill and then brought into a form, typically dice-like pieces, suitable for subsequent processing.

The compositions may then be extruded onto a wire or cable, or other substrate. If the compositions of the present invention, are chemically curable, they are extruded onto the wire or cable, or other substrate and vulcanized at elevated temperatures of about >180°C and preferably at >200—230°C using conventional vulcanizing procedures.

The following examples are illustrative of the present invention and are not intended to limit the scope thereof in any manner.

Compositions were prepared by admixing components, identified in Table 1, in a 40 gram Brabender mixer which had been preheated to a temperature of 120°C, for about five minutes. After the five minute period, the contents of the Brabender were discharged, hot, flattened in a press and allowed to cool.

Samples of each composition were used to prepare test plaques, having dimensions of 7.6 cm by 20.3 cm by 0.318 cm (3 inches by 8 inches by 0.125 inch), in a press under the following conditions: pressure—345 bar (5000 psi) Temperature—180°C Time cycle—15 minutes.

Plaques were then subjected to the Limiting Oxygen test ASTMD-2863—70, which is an indication of flame retardant properties.

Formulations of Example 1 and Controls 1—3 were in parts by weight.

The data of Table 1 clearly indicates, on a direct comparison, between a composition based on an alkylene-alkyl acrylate copolymer, i.e. ethylene-ethyl acrylate (Example 1) and a composition based on an ethylene-vinyl acetate copolymer (Control 1) that the composition of Example 1 has superior flame retardant properties, 26.2 as compared to 23.3 for the composition of Control 1.

The data of Example 1 and Controls 1—3 is further illuminating as it establishes that: when antimony oxide and an alkaline earth metal base or salt are both present in a composition based on an alkylene-alkyl acrylate copolymer the flame retardant properties of the composition are superior compared to a similar composition which does not contain an alkaline earth metal base or salt (Control 3); 26.3 compared to 25.3.

The significance of the presence of an alkaline earth metal salt or base in a composition based on an alkylene-alkyl acrylate copolymer has been seen by the applicant in preventing, upon burning, evolution of dense smoke, to reduce evolution of acidic and corrosive gases and to reduce after glow.

When antimony oxide and alkaline earth metal salt or base are both present in a composition based on ethylene-vinyl acetate (Control 1) the flame retardant properties of the composition are poorer compared to a similar composition which does not contain an alkaline earth metal base or salt (Control 2); 23.3 compared to 24.2.

TABLE 1

| Formulation: | Percent by weight Example 1 | Control 1 | Control 2 | Control 3 |
|---|---|---|---|---|
| Copolymer of ethylene-ethyl acrylate containing 15 percent by weight combined ethyl acrylate—melt index 1.6 | 55 | — | — | 55 |
| Copolymer of ethylene-vinyl acetate containing 10 percent by weight combined vinyl acetate—melt index 2.0 | — | 55 | 55 | — |
| Talc coated with zinc stearate | 21.5 | 21.5 | 24 | 24 |
| Antimony trioxide | 2.5 | 2.5 | 2.5 | 2.5 |
| Calcium carbonate | 2.5 | 2.5 | — | — |
| Ethylene (bis-tetrabromophthalimide) (flame retardant additive) | 16.0 | 16.0 | 16.0 | 16.0 |
| 1,2-Dihydro-2,3,4-trimethyl quinoline (antioxidant) | 0.5 | 0.5 | 0.5 | 0.5 |
| Vinyl-tris(2-methoxyethoxy) silane | 0.2 | 0.2 | 0.2 | 0.2 |
| Di-α-cumyl peroxide | 1.8 | 1.8 | 1.8 | 1.8 |
| Limiting Oxygen Index | 26.2 | 23.3 | 24.2 | 25.3 |

A masterbatch composition was prepared and samples thereof, with and without additional additives were tested for flame retardancy and evolution of smoke.

The masterbatch composition had the following formulation:

| | Percent by weight |
|---|---|
| Copolymer of ethylene-ethyl acrylate containing 15 percent by weight combined ethyl acrylate and having a melt index of 1.6 | 58.9 |
| Talc coated with zinc stearate | 23.1 |
| Ethylene(bis-tetrabromophthalimide) | 17.2 |
| 1,2-Dihydro-2,3,4-trimethyl quinoline | 0.6 |
| Vinyl-tris(2-methoxyethoxy) silane | 0.2 |

To this masterbatch there was also added 1.5 percent by weight di-α-cumyl peroxide.

Samples of the masterbatch composition, containing the peroxide and subsequently identified in Table 2 as MB were admixed with various additives and the resultant compositions were formed into plaques, all as previously described and tested for flame retardancy and evolution of smoke, upon burning.

TABLE 2

| | Percent by weight | | | |
|---|---|---|---|---|
| | Example 2 | Control 4 | Control 5 | Control 6 |
| M.B. | 88 | 100 | 98.5 | 90 |
| Antimony trioxide | 2 | 0 | 1.5 | 0 |
| Calcium carbonate | 10 | 0 | 0 | 10 |
| Limiting oxygen index | 26.5 | 23.8 | 24.6 | 25.3 |
| Percent by weight smoke evolved, on burning, based on weight of sample burned | 7.97 | 6.76 | 10.53 | 4.69 |

Similar results are achieved using one or more of the following: magnesium carbonate, magnesium oxide, magnesium hydroxide, magnesium sulfate, calcium oxide, calcium hydroxide and calcium sulfate in conjunction with an antimony oxide in alkylene-alkyl acrylate copolymer compositions as described herein.

**Claims**

1. A composition comprising an alkylene-alkyl acrylate copolymer, from 1 to 30 percent by weight of a halogenated flame retardant additive, from 0.5 to 50 percent by weight of an oxide, carbonate, hydroxide or sulfate of magnesium or calcium and from 0.5 to 15 percent by weight of an antimony oxide, preferably antimony trioxide.

2. A composition comprising an alkylene-alkyl acrylate copolymer, from about one to about 30 percent by weight of a halogenated flame retardant additive, from about 0.5 to about 30 percent by weight of an oxide, carbonate, hydroxide or sulfate of magnesium or calcium and from about 0.5 to about 15 percent by weight of an antimony oxide.

3. A composition as defined in claims 1 or 2, wherein the said copolymer is an ethylene-ethyl acrylate copolymer.

4. A composition as defined in claims 1 to 3 wherein the magnesium or calcium compound is present in an amount of from about 0.5 to 20 percent by weight.

5. A composition as defined in claims 1 to 3 wherein the magnesium or calcium compound is present in an amount more than 20 up to about 30 percent by weight.

6. A composition as defined in claims 1 to 3 wherein the antimony oxide is present in an amount of about one to about 10 percent by weight.

7. A composition as defined in claims 1 to 3 comprising an alkylene-alkyl acrylate copolymer, from about one to about 30 percent by weight of a halogenated flame retardant additive, from about 0.5 to 20 percent by weight of an oxide, carbonate, hydroxide or sulfate of magnesium or calcium and from about one to about 5 percent by weight of an antimony oxide.

8. A composition as defined in claims 1 to 3 comprising an alkylene-alkyl acrylate copolymer, from about one to about 30 percent by weight of a halogenated flame retardant additive, more than 20 and up to about 30 percent by weight of an oxide, carbonate, hydroxide or sulfate of magnesium or calcium and from about one to about 10 percent by weight of an antimony oxide.

9. A composition as defined in claims 1 to 3 comprising an alkylene-alkyl acrylate copolymer, from about 5 to about 20 percent by weight of a halogenated flame retardant additive, from about 2.5 to about 12 percent by weight of an oxide, carbonate, hydroxide or sulfate of magnesium or calcium and from about one to about 10 percent by weight of an antimony oxide.

10. A composition as defined in claims 1—9 wherein the said oxide, carbonate, hydroxide or sulfate of magnesium or calcium is calcium carbonate, calcium oxide, calcium hydroxide, calcium sulfate, magnesium carbonate, magnesium oxide, magnesium hydroxide or magnesium sulfate.

11. A composition as defined in claims 1—10 wherein the oxide, carbonate, hydroxide or sulfate of magnesium or calcium is coated with an organo titanate, organo silane or a metal salt of a fatty acid.

12. A composition as defined in claims 1—11 which contains a talc filler, preferably a talc filler which is coated with an organo silane, an organo titanate or a metal salt of a fatty acid.

13. A composition as defined in claims 1 to 12 containing an organo silane.

14. A composition as defined in claims 1 to 13 containing a peroxide.

15. The crosslinked product of the composition defined in claim 14.

16. The use of the compositions according to claims 1 to 14 or the crosslinked composition of claim 15 for insulating electrical conductors or jacketing wires or cables.

**Revendications**

1. Composition comprenant un copolymère alkylène-acrylate d'alkyle, 1 à 30% en poids d'un additif halogéné retardateur de flamme, 0,5 à 50% en poids d'un oxyde, carbonate, hydroxyde ou sulfate de magnésium ou de calcium et 0,5 à 15% en poids d'un oxyde antimoine, de préférence le trioxyde d'antimoine.

2. Composition comprenant un copolymère alkylène-acrylate d'alkyle, environ 1 à environ 30% en poids d'un additif halogéné retardateur de flamme, environ 0,5 à environ 30% en poids d'un oxyde, carbonate, hydroxyde ou sulfate de magnésium ou de calcium et environ 0,5 à environ 15% en poids d'un oxyde d'antimoine.

3. Composition telle que définie dans les revendications 1 ou 2, dans laquelle ledit copolymère est un copolymère éthylène-acrylate d'éthyle.

4. Composition telle que définie dans les revendications 1 à 3, dans laquelle le composé de magnésium ou de calcium est présent en une quantité d'environ 0,5 à 20% en poids.

5. Composition telle que définie dans les revendications 1 à 3, dans laquelle le composé de magnésium ou de calcium est présent en une quantité allant de plus de 20 à environ 30% en poids.

6. Composition telle que définie dans les revendications 1 à 3, dans laquelle l'oxyde d'antimoine est présent en une quantité d'environ 1 à environ 10% en poids.

7. Composition telle que définie dans les revendications 1 à 3, comprenant un copolymère alkylène-acrylate d'alkyle, environ 1 à environ 30% en poids d'un additif halogéne retardateur de flamme, environ 0,5 à 20% en poids d'un oxyde, carbonate, hydroxyde ou sulfate de magnésium ou de calcium et environ 1 à environ 5% en poids d'un oxyde d'antimoine.

8. Composition telle quel définie dans les revendications 1 à 3, comprenant un copolymère alkylène-acrylate d'alkyle, environ 1 à environ 30% en poids d'un additif halogéné retardateur de flamme, plus de 20 et jusqu'à environ 30% en poids d'un oxyde, carbonate, hydroxyde ou sulfate de magnésium ou de calcium et environ 1 à environ 10% en poids d'un oxyde d'antimoine.

9. Composition telle que définie dans les revendications 1 à 3, comprenant un copolymère alkylène-acrylate d'alkyle, environ 5 à environ 20% en poids d'un additif halogéné retardateur de flamme, environ 2,5 à environ 12% en poids d'un oxyde, carbonate, hydroxyde ou sulfate de magnésium ou de calcium et environ 1 à environ 10% en poids d'un oxyde d'antimoine.

10. Composition telle que définie dans les revendications 1—9, dans laquelle ledit oxyde, carbonate, hydroxyde ou sulfate de magnésium ou de calcium est le carbonate de calcium, l'oxyde de calcium, l'hydroxyde de calcium, le sulfate de calcium, le carbonate de magnésium, l'oxyde de magnésium, l'hydroxyde de magnésium ou le sulfate de magnésium.

11. Composition telle que définie dans les revendications 1—10, dans laquelle l'oxyde, carbonate, hydroxyde ou sulfate de magnésium ou de calcium est revêtu d'un titanate organique, d'un organosilane ou d'un sel métallique d'un acide gras.

12. Composition telle que définie dans les revendications 1—11, qui contient une charge formée de talc, de préférence une charge formée de talc qui est revêtue d'un organosilane, d'un titanate organique ou d'un sel métallique d'un acide gras.

13. Composition telle que définie dans les revendications 1 à 12, contenant un organosilane.

14. Composition telle que définie dans les revendications 1 à 13, contenant un peroxyde.

15. Le produit réticulé de la composition définie dans la revendication 14.

16. Utilisation des compositions suivant les revendications 1 à 14 ou de la composition réticulée de la revendication 15 pour isoler des conducteurs électriques ou pour gainer des fils ou des câbles.

**Patentansprüche**

1. Zusammensetzung, welche ein Alkylen-Alkylacrylat-Copolymer, 1 bis 30 Gew.-% eines halogenierten flammhemmenden Zusatzes, 0,5 bis 50 Gew.-% eines Oxids, Carbonates, Hydroxids oder Sulfates von Magnesium oder Calcium und 0,5 bis 15 Gew.-% Antimonoxid, vorzugsweise Antimontrioxid umfaßt.

2. Zusammensetzung welche ein Alkylen-Alkylacrylat-Copolymer, etwa 1 bis etwa 30 Gew.-% eines halogenierten flammhemmenden Zusatzes, etwa 0,5 bis etwa 30 Gew.-% eines Oxids, Carbonates, Hydroxids oder Sulfats von Magnesium oder Calcium und etwa 0,5 bis etwa 15 Gew.-% eines Antimonoxids umfaßt.

3. Zusammensetzung gemäß Ansprüch 1 oder 2, in welcher das Copolymer ein Ethylen-Ethylacrylat-Copolymer ist.

4. Zusammensetzung gemäß Anspruch 1 bis 3, in welcher die Magnesium- oder Calciumverbindung in einer Menge von etwa 0,5 bis 20 Gew.-% anwesend ist.

5. Zusammensetzung gemäß Anspruch 1 bis 3, in welcher die Magnesium- oder Calciumverbindung in einer Menge über 20 bis zu etwa 30 Gew.-% anwesend ist.

6. Zusammensetzung gemäß Anspruch 1 bis 3, in welcher das Antimonoxid in einer Menge von etwa 1 bis etwa 10 Gew.-% anwesend ist.

7. Zusammensetzung gemäß Anspruch 1 bis 3, welche ein Alkylen-Alkylacrylat-Copolymer, etwa 1 bis etwa 30 Gew.-% eines halogenierten flammhemmenden Zusatzes, etwa 0,5 bis 20 Gew.-% eines Oxids, Carbonates, Hydroxids oder Sulfates von Magnesium oder Calcium und etwa 1 bis etwa 5 Gew.-% eines Antimonoxids umfaßt.

8. Zusammensetzung gemäß Anspruch 1 bis 3, welche ein Alkylen-Alkylacrylat-Copolymer, etwa 1 bis etwa 30 Gew.-% eines halogenierten flammhemmenden Zusatzes, mehr als 20 und bis zu etwa 30 Gew.-% eines Oxids, Carbonates, Hydroxids oder Sulfates von Magnesium oder Calcium und etwa 1 bis etwa 10 Gew.-% eines Antimonoxids umfaßt.

9. Zusammensetzung gemäß Anspruch 1 bis 3, welche ein Alkylen-Alkylacrylat-Copolymer, etwa 5 bis etwa 20 Gew.-% eines halogenierten flammhemmenden Zusatzes, etwa 2,5 bis etwa 12 Gew.-% eines Oxids, Carbonates, Hydroxids oder Sulfates von Magnesium oder Calcium und etwa 1 bis etwa 10 Gew.-% eines Antimonoxids umfaßt.

10. Zusammensetzung gemäß Anspruch 1 bis 9, in welcher das Oxid, Carbonat, Hydroxid oder Sulfat von Magnesium oder Calcium Calciumcarbonat, Calciumoxid, Calciumhydroxid, Calciumsulfat, Magnesiumcarbonat, Magnesiumoxid, Magnesiumhydroxid oder Magnesiumsulfat ist.

11. Zusammensetzung gemäß Anspruch 1 bis 10, in welcher das Oxid, Carbonat, Hydroxid oder Sulfat von Magnesium oder Calcium mit einem Organotitanat, Organosilan oder einem Metallsalz einer Fettsäure überzogen ist.

12. Zusammensetzung gemäß Anspruch 1 bis 11, die ein Talkumfüllmittel, vorzugsweise ein Talkumfüllmittel, das mit einem Organosilan, einem Organotitanat oder einem Metallsalz einer Fettsäure überzogen ist, enthält.

13. Zusammensetzung gemäß Anspruch 1 bis 12, die ein Organosilan enthält.

14. Zusammensetzung gemäß Anspruch 1 bis 13, die ein Peroxid enthält.

15. Vernetztes Product der in Anspruch 14 definierten Zusammensetzung.

16. Die Verwendung der Zusammensetzungen gemäß Anspruch 1 bis 14 oder der vernetzten Zusammensetzung gemäß Ansprüch 15 zur Isolierung elektrischer Leiter oder zum Ummantelung von Drähten oder Kabeln.